# EUROPEAN PATENT SPECIFICATION

(11) **EP 3 508 976 B1**
(45) Date of publication and mention of the grant of the patent: **20.09.2023**
(21) Application number: 18203941.2
(22) Date of filing: 01.11.2018
(51) Int. Cl.: G06F 9/50, G06Q 10/10, G06Q 10/04

(54) **PRESCRIPTIVE ANALYTICS BASED COMPUTE SIZING CORRECTION STACK FOR CLOUD COMPUTING RESOURCE SCHEDULING**
AUF PRÄSKRIPTIVEN ANALYSEN BASIERTER BERECHNUNGSGRÖSSENKORREKTURSTAPEL ZUR PLANUNG VON CLOUD-COMPUTING-RESSOURCEN
EMPILEMENT DE CORRECTION DE CALIBRAGE INFORMATIQUE BASÉ SUR L'ANALYSE PRESCRIPTIVE POUR UNE PROGRAMMATION DE RESSOURCE INFORMATIQUE EN NUAGE

(30) Priority: 03.01.2018 IN 201841000310; 15.03.2018 US 201815922650
(43) Date of publication of application: 10.07.2019
(73) Proprietor: Accenture Global Solutions Limited, Dublin 4 (IE)
(72) Inventor: Srinivasan, Madhan, Dublin, 4 (IE); Pv, Guruprasad, Dublin, 4 (IE); Eisenstein, Michael, Dublin, 4 (IE); Desai, Vijay, Dublin, 4 (IE); Purushothaman, Arun, Dublin, 4 (IE)
(74) Representative: Boult Wade Tennant LLP

(56) References cited:
- WO-A1-2013/158139
- US-A1- 2010 199 285
- US-A1- 2010 269 109
- US-A1- 2011 302 578
- US-A1- 2012 239 739
- US-A1- 2014 068 609
- US-A1- 2015 288 573
- US-A1- 2015 331 703
- US-A1- 2017 075 709

## Description

### Technical Field

This disclosure relates to cloud computing resource scheduling via a prescriptive analytics based compute sizing correction stack.

### Background

Rapid advances in communications and storage technologies, driven by immense customer demand, have resulted in widespread adoption of cloud systems for managing large data payloads, distributed computing, and record systems. As one example, modern enterprise systems presently maintain data records many petabytes in size in the cloud. Improvements in tools for cloud resource allocation and consumption prediction will further enhance the capabilities of cloud computing systems.
US2015331703 discusses a method that includes launching a virtual machine based upon an image on a virtualization host, associating the virtual machine with a user, monitoring a metric of the virtual machine that measures usage of a resource of the virtual machine, determining that the metric has exceeded a threshold more than an allowable number of times in a time period, determining an additional amount of the resource to increase in the virtual machine, updating the image to include the additional amount of the resource, launching a second virtual machine based upon the updated image, and associating the second virtual machine with the user. US2017075709 discusses methods including, for instance: predictively provisioning, by one or more processor, cloud computing resources of a cloud computing environment for at least one virtual machine; and initializing, by the one or more processor, the at least one virtual machine with the provisioned cloud computing resources of the cloud computing environment.
US2010269109 discusses a method for evaluating historical metrics in selecting a physical host for execution of a virtual machine which includes receiving, by a host recommendation service, an identification of a virtual machine and a request for an identification of a physical host on which to execute the virtual machine.
US2010199285 discusses an analytics engine receiving real-time statistics from a set of virtual machines supporting a line of business (LOB) application. The statistics relate to computing resource utilization and are used by the analytics engine to generate a prediction of demand for the LOB application in order to dynamically control the provisioning of virtual machines to support the LOB application.
US2014068609 discusses machines, systems and methods for deciding whether a plurality of virtual machines (VMs) may be hosted on a computing system with resources to support at least one of the VMs, the method comprising determining maximum permissible probability of infringement (maxPermInfrProb(v)) for a VM(v), wherein "v" is a value from 1 to n, such that n is the number of VMs in a set G, as stipulated by the VMs' SLA, wherein "v" is a value from 1 to n, such that n is the number of VMs in a set G; partitioning the set G into a plurality of groups Gi (G1, ... Gi, ... Gn), so that each group is homogenous with respect to maxPermlnfrProb defined for members of the group Gi; and organizing the groups Gi based on the value of maxPermlnfrProb for each Gi.
WO2013158139 discusses according to an example, a method for virtual computing resource orchestration which includes receiving environmental data related to an operational characteristic of a compute resource for hosting a virtual machine (VM), receiving VM data related to an operational characteristic of the VM, and determining if the environmental data or the VM data violate predetermined threshold values respectively related to the environmental data and the VM data.
US2011302578 discusses a system and method for provisioning virtual machines in a virtualized environment which includes determining a relationship between capacity need and performance for virtual machines (VMs) stored in memory storage media.
US2015288573 discusses approaches for optimizing network demand forecasting models and network topology using hyperparameter selection are provided. An approach includes defining a pool of features that are usable in models that predict demand of network resources, wherein the pool of features includes at least one historical forecasting feature and at least one event forecasting feature.

### Brief Description of the Drawings

Figure 1 shows an example multiple-layer compute sizing correction stack.
Figure 2 shows example compute sizing correction stack logic.
Figure 3 shows an example specific execution environment for the compute sizing correction stack of Figure 1.
Figure 4 shows an example compute sizing correction control interface.

### Detailed Description

In cloud computing systems, computing resources such as virtual machines, memory, processor cores, or other computing resources may be scheduled for planned utilization. In some cases, a computing resource may itself constitute an over-provisioning or under provisioning. For example, a provisioned virtual machine may be utilized sporadically or partially, such that a virtual machine corresponding to a smaller compute size could fill the demands on the provisioned virtual machine, where size refers to one or more computing capacities of the computing resource. Conversely, a provisioned virtual machine may be used continually or at capacity and may be unable to fulfill computing requests assigned to it. For example, the virtual machine, in some cases, may reject or be non-responsive to over-capacity requests. Accordingly, an over-sized or under-sized computing resource may lead to performance degradation or inefficient deployment of hardware resources.

Accordingly, increased compute sizing accuracy provides a technical solution to the technical problem of system inefficiency by increasing the utilization and efficiency of cloud computing resources. The compute sizing correction (CSC) stack techniques and architectures described below may be used to prescribe computing resource sizing recommendations based on compute utilization sizing. criterion. Further, the determination of the compute sizing correction may rely on data sources such as, utilization data, expenditure report data for resource reservation/activation, computing resource consumption metric data, activation request data, functional grouping data, topological or relationship data, tagging data, or other metadata. Thus, a CSC stack may provide prescriptive analytical sizing correction taking into account resource utilization patterns, computing resource types, computing resource availability, consumption metric data, workload and topological data, geographic data, and/or other data. Thus, the disclosed CSC stack techniques and architectures improve the operation of the underlying hardware by increasing computing efficiency and provide an improvement over existing solutions.

The CSC stack may analyze historical utilization data, tagging data and consumption metric data to predict future utilization and produce prescriptive recommendations. Utilization data, may include, for example, historical data related to usage or activation of cloud computing resources, e.g., resource allocation history, activation/reservation/committed-use history data, expenditure report data for resource reservation/activation/committed-use, processor activity, memory usage history, computing cycles, data throughput, or other utilization metrics, seasonal usage cycles e.g., holiday schedules, daily usage cycles, weekly usage cycles, quarterly usage cycles or other data. Tagging data may include computing resource specific data. For example, tagging data may include data provided by an operator, provisioning or configuration management system, or an analyzed system detailing functional groupings (e.g., project-specific allocations, hardware (including virtualized hardware) marked for a specific purpose, availability zones, operating systems applications, installed software, or other groupings), quality of service requirements, minimum allocations, environmental data, license tags, or other tagging data. Consumption metric data may include computing resource specific cost metrics such as expenditure-per-time or resource-per-time metrics.

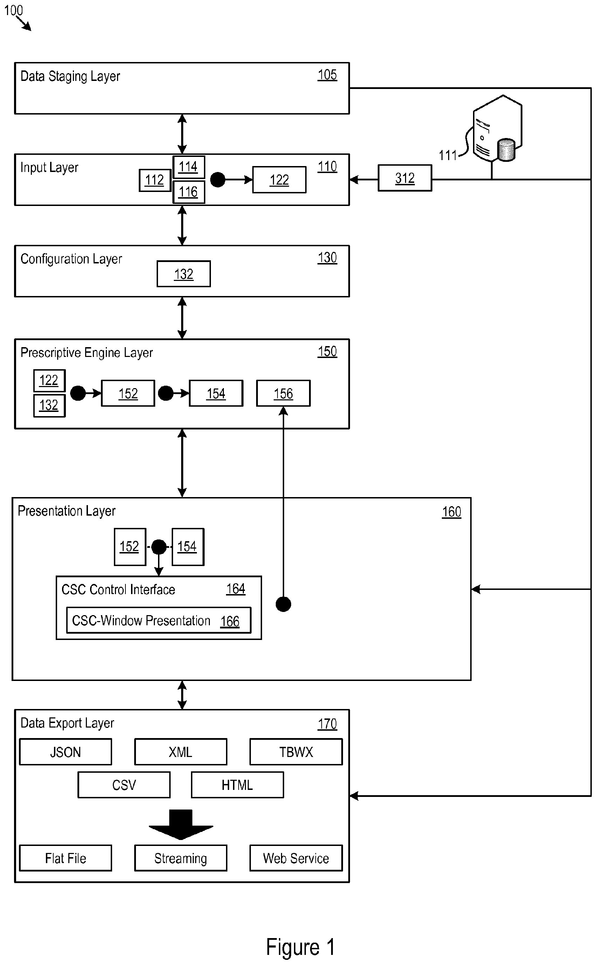

Figure 1 shows an example multiple layer CSC stack 100, which may execute on sizing circuitry making up the hardware underpinning of the CSC stack 100. In this example, the CSC stack 100 includes a data staging layer 105, an input layer 110, a configuration layer 130, a prescriptive engine layer 150, a presentation layer 160, and a data export layer 170. The CSC stack 100 may include a multiple-layer computing structure of hardware and/or software that may provide prescriptive analytical recommendations (e.g., static reservation scheduling for virtual machines or other computing resource activation scheduling) through data analysis.

In some implementations, as discussed below, CRSR Engine - a Cloud Right-Sizing Recommendation Engine developed by Accenture^{®} Bangalore may be operated as the CSC stack 100.

A stack may refer to a multi-layered computer architecture that defines the interaction of software and hardware resources at the multiple layers. The Open Systems Interconnection (OSI) model is an example of a stack-type architecture. The layers of a stack may pass data and hardware resources among themselves to facilitate data processing. As one example for the CSC stack 100, the data staging layer 105 may provide the input layer 110 with storage resources to store ingested historical utilization data within a database. Hence, the data staging layer 105 may provide a hardware resource, e.g., memory storage resources, to the input layer 110. Accordingly, the multiple-layer stack architecture of the CSC stack may improve the functioning of the underlying hardware.

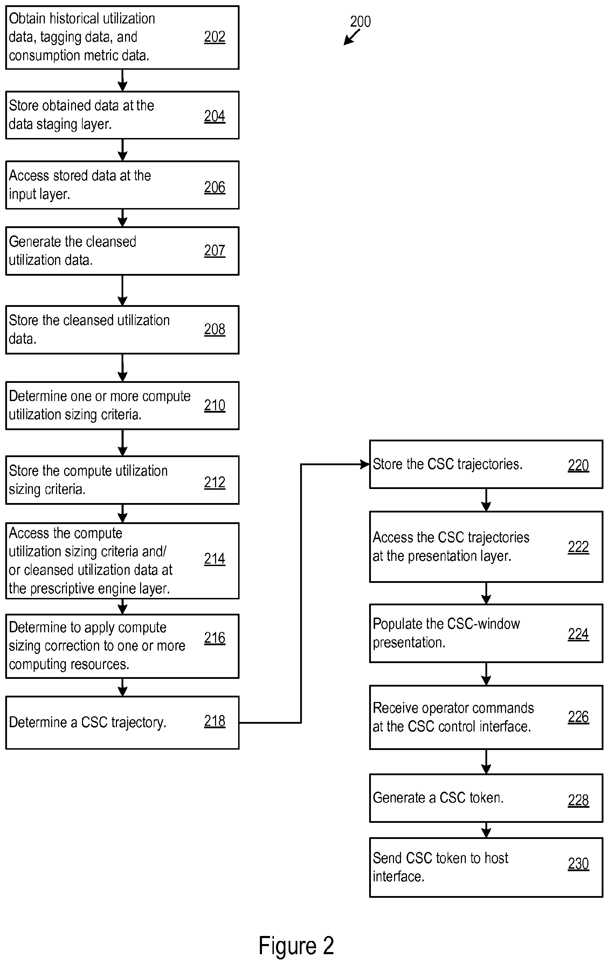

In the following, reference is made to Figure 1 and the corresponding example CSC stack logic (CSCL) 200 in Figure 2. The logical features of CSCL 200 may be implemented in various orders and combinations. For example, in a first implementation, one or more features may be omitted or reordered with respect to a second implementation. At the input layer 110 of the CSC stack 100, the CSCL 200 may obtain historical utilization data 112, consumption metric data 114, and tagging data 116 (202) and then store the obtained data at the data staging layer 105 (204). In some cases, the historical utilization data 112, consumption metric data 114, and tagging data 116 may be received via communication interfaces (e.g., communication interfaces 312, discussed below). The historical utilization data 112, consumption metric data 114, and tagging data 116 may be accessed at least in part, e.g., via the communication interfaces 312, from data sources 111, which may include, cloud compute utilization databases, cloud expenditure databases, master virtual machine cost databases, committed-use history databases, virtual machine family/template description data, infrastructure/project tags or other data sources. The historical utilization data 112 may be provided by cloud compute utilization databases, cloud expenditure databases, committed-use history databases, or other utilization data sources. The consumption metric data 114 may be provided by cloud expenditure databases, master virtual machine cost databases, virtual machine family/template/platform as a service, description data, or other consumption metric data sources. The tagging data 116 may be provided by virtual machine family/template description data, infrastructure/project tags or other tagging data sources.

After the historical utilization data 112, consumption metric data 114, and tagging data 116 are obtained and stored, the input layer 110 may access the some or all of the stored data (206) using memory resources passed from the data staging layer 105 (e.g., memory access resources). The input layer 110 may process the historical utilization data 112 to generate a cleansed utilization data 122 for the computing resources (207). For example, the input layer may reformat historical utilization data obtained from multiple sources into a common format for analysis. The common format may be a selected format to which data in other formats are translated. In some cases, the cleansed utilization data 122 may include a time-correlated history and cycle analysis of past computing resource usage to facilitate determination of likely patterns of future usage, e.g., for individual computing resources, computing resources within a functional group, or other groups of computing resources.

In some cases, the techniques and architectures used in conjunction with an activation timetable stack such as that described in U.S. Patent publication US2019079848, filed November 13, 2017, entitled Prescriptive Analytics Based Activation Timetable Stack for Cloud Computing Resource Scheduling, may be used to perform or assist in generation of the cleansed utilization data 122. Therein, the input layer of the activation timetable stack may parse historical utilization data, consumption metric data, and tagging data to identify patterns at multiple timescales. The input layer of the activation timetable stack may then generate time-correlated consumption data. In an illustrative scenario of how the CSC stack 100 may utilize the activation timetable stack outputs, the parsing of the historical utilization data, consumption metric data, and tagging data, done by the input layer of the activation timetable stack may be implemented by the input layer 110 of the CSC stack to generate the cleansed utilization data 122 (207).

Additionally or alternatively, to process the stored data 112, 114, 116, the input layer 110 may analyze time components of the stored data 112, 114, 116 to determine time related patterns. For example, the input layer 110 may identify weekly, monthly, holiday, seasonal, or other time cycles present within the stored data 112, 114, 116. Time-independent data, such as, non-conditional functional group assignments, may be applied to all time periods. However, temporal or otherwise dynamic functional groupings may be correlated to corresponding timescales.

To generate the cleansed utilization data 122, the input layer 110 may determine one or more timescales (e.g., timescales including time-invariant contributions) present within the data. For example, the input layer 110 may apply various frequency analyses to the data to determine periodic, aperiodic, and/or time-invariant trends. Additionally or alternatively, the input layer 110 may apply rule-based analyses such as holiday schedules, operational hours, or annual enterprise cycles that may be expressly defined by rules rather than through inferential analysis.

Once the cleansed utilization data 122 is generated, the input layer 110 stores the cleansed utilization data 122, via a database operation at the data staging layer 105 (208). For example, the cleansed utilization data 122 may be stored on storage dedicated to the CSCL 200. Additionally or alternatively, the cleansed utilization data 122 may be stored on a shared database or cloud storage. Accordingly, the data staging layer 105 may further access network resources (e.g., via communication interfaces 312, discussed below) to implement memory resource provision to the other layers. In an example implementation, the CSCL 200 may be defined within a Revolution-R environment. However, other design platforms may be used.

At the configuration layer 130 of the CSC stack 100, the CSCL 200 determines one or more compute utilization sizing criteria 132 (210). The compute utilization sizing criteria 132 may include threshold values, values for extrema (e.g., minimum, maximum), averages, or other criteria for determining when and how strongly to apply compute sizing correction.

The compute utilization sizing criteria 132 may be supplied via operator input, e.g., via the CSC control interface 164, as discussed below. For example, an operator may select to apply compute sizing correction to computing resources with 95^{th} percentile usage below a threshold value (or conversely determine to not compute sizing correction computing resources with 95^{th} percentile usage above a minimum threshold value).

Once, the CSCL 200 determines the compute utilization sizing criteria 132, the CSCL 200 stores the compute utilization sizing criteria 132 via operation at the data staging layer 105 (212).

The prescriptive engine layer 150 accesses the cleansed utilization data 122 and/or the compute utilization sizing criteria 132 using a memory resource provided by the data staging layer 105 (214). For example, the data staging layer 105 may provide a memory read resource (such as a SQL database read resource) to the prescriptive engine layer 150 to allow access to the cleansed utilization data 122.

Using the cleansed utilization data 122 and/or the compute utilization sizing criteria 132, the CSCL 200, at the prescriptive engine layer 150, determines to apply compute sizing correction to one or more computing resources (216). The determination may include predicting future utilization based on the time patterns extracted in the cleansed utilization data 122 generated at the input layer (or received, e.g., from an activation timetable stack, at the input layer).

In an illustrative example, the prescriptive engine layer 150 may implement the example routine in Table 1 to determine a CSC trajectory for a computing resource.

| Table 1: Example Routine for Determination of CSC Trajectory | | | |
|---|---|---|---|
| | | | Description |
| Example Routine | ***Right-Size** == *If α(t)* <= *π OR [(α(t)*> *π*) & *(P95(t)*<*µ)*** | | |

| | | | |
|---|---|---|---|
| **α(t)** : Max utilization value for a time period "t". **π** : Max utilization threshold value (example compute utilization criterion). **P95(t)** : 95^{th} percentile utilization value for the time period "t". **µ** : P95 threshold utilization value (example compute utilization criterion). | | | |

The CSCL 200 further determines a CSC trajectory 152 for a computing resource (218). A CSC trajectory 152 includes a target. The CSC trajectory 152 further details one or more CSC cycle adjustments 154 that indicate intermediate compute sizing correction steps to progress towards the target sizing. The compute sizing correction steps in some cases may correspond to an allowed adjustment within a cycle (e.g., billing period, interval, or other time period). Detailing an allowed adjustment may prevent the CSCL 200 from adjusting a computing resource at a rate that may produce unexpected results. For example, a CSC stack may constrain sizing adjustments to one sizing increment per cycle. However, other adjustment constraints may be used.

In some implementations, CSCL 200 may apply a binary compute sizing correction determination. For example, the CSCL 200 may determine which computing resources will have compute sizing correction applied. Then, the CSCL 200 may prescribe a unitary sizing adjustment (either incrementing the sizing or decrementing the sizing) to each of the determined computing resources. In such a binary compute sizing correction determination, the CSC trajectory corresponds to the unitary increment/decrement and the CSC cycle adjustment 154 also corresponds to the unitary increment/decrement.

To determine the target sizing, the CSCL 200 determines the sizing for the computing resource that would cause it to meet the compute utilization sizing criteria 132 based on the cleansed utilization data available for the computing resource.

In some cases, the CSCL 200 may further account for static reservation in compute sizing correction determinations. For example, the CSCL 200 may avoid applying sizing corrections to statically reserved computing resources (or computing resources for which static reservation is prescribed or planned). Accordingly, the CSCL 200 may increase sizing corrections (or the magnitude of such corrections). e.g., relative to initial sizing adjustment determinations, on dynamically reserved computing resources to avoid applying compute sizing correction to statically reserved computing resources. Accordingly, the CSCL 200 may reduce or eliminate a determined sizing reduction for a statically reserved computing resource or increase a sizing reduction for a dynamically reserved computing resource when other computing resources in the same functional group are statically reserved. Accordingly, the CSCL 200 may shift computing load to statically reserved computing resources from dynamically reserved computing resources.

In some implementations, the CSCL 200 may identify statically and dynamically reserved computing resources by accessing a reservation matrix, such as that generated by a committed compute reservation stack such as that described in Indian Patent Application No. 201741044406, filed December 11, 2017, entitled Prescriptive Analytics Based Committed Compute Reservation Stack for Cloud Computing Resource Scheduling. The reservation matrix may detail a distribution of statically and dynamically computing resources. In some implementations, the CSCL 200 may exhaust sizing adjustments for dynamically provisioned computing resources before applying sizing adjustment to statically reserved resources. In some implementations, the CSCL 200 may engage in an iterative sizing determination scheme with a committed compute reservation stack. The committed compute reservation stack may designate an initial distribution of static and dynamic computing resources. Then, the CSCL 200 may make sizing adjustments. The committed compute reservation stack may again adjust the distribution and the CSCL 200 may make further sizing adjustments. The iterative adjustment process may continue eventually reaching a steady state distribution and sizing determination.

In some implementations, CSCL 200, at the prescriptive engine layer 150, may alter the CSC trajectories 152 and/or CSC cycle adjustments 154 based on learned preferences from operator command feedback history. For example, the prescriptive engine layer 150 may account for consumption savings patterns within operator comments. For example, some operators may aggressively pursue sizing reductions. Accordingly, the CSCL 200 may preemptively increase prescribed sizing reductions and/or preemptively decrease prescribed sizing increases. Conversely, an operator may demonstrate a reluctant to pursue sizing reductions and the prescriptive engine layer may adjust its prescriptions in the opposite direction. In some cases, operators may demonstrate functional group specific preferences. For example, operators may resist sizing adjustments to specific functional groups, while freely accepting prescriptions for sizing in other functional groups. Accordingly, the prescriptive engine layer 150 may apply machine learning to identify such patterns within operator commands and preemptively adjust the prescriptions produced to more closely match operator preferences.

In some implementations, CSC trajectories and/or CSC cycle adjustments 154 may involve sizing adjustments that port computing resources across services, vendors, hardware platforms, or other characteristics. The CSCL 200 may apply rules to ensure the preservation of selected characteristics, e.g., operating system, region, security, networking throughput, or other characteristics, of the computing resources across such transactions. For example, when porting across vendors to implement a sizing adjustment, the CSCL 200 may ensure that the operating system used by the replacement computing resource is the same as that before the transition. The CSCL 200 may also disallow certain transitions. For example, some implementations may disallow sizing transitions involving vendor changes.

Referring again to Figures 1 and 2, the CSCL 200 may store the CSC trajectories 152 for the computing resources, via interaction with the data staging layer (220).

The presentation layer 160 may then access the CSC trajectories for the computing resources (222). The presentation layer 160 may merge the CSC trajectories and CSC cycle adjustments with consumption metric data to generate consumption saving data corresponding to the CSC trajectories and CSC cycle adjustments. The presentation layer 160 may sort the computing resources according to consumption savings, functional groups, sizing adjustment magnitude, or other variables. The presentation layer 160 may generate the CSC control interface 164 and populate the CSC-window presentation 166 with the CSC trajectories and CSC cycle adjustments and accompanying data and options (224).

The CSC control interface may receive operator commands, e.g., accepting and/or rejecting prescribed sizing adjustments (226). The CSCL 200 may incorporate the operator commands, and, at the prescriptive engine layer 150, generate a CSC token 156 (228). The CSC token 156 may include commands, scripts, or other code to cause host interfaces for controlling the respective computing resources to implement the sizing adjustments. For example, services such as Amazon^{®} Web Services (AWS), Google^{®} Compute Engine, Microsoft^{®} Azure, or other cloud computing services, may maintain host interfaces (e.g., web interfaces, application programming interfaces, or other interfaces) by which clients may define operation of the computing resources. The CSCL 200 may also use a scheduling proxy system that uses the CSC trajectory data, CSC cycle adjustment data, and operator command data to maintain schedules, calling the service provider's application programming interfaces, e.g., by sending a CSC token, for each sizing adjustment control action defined by the schedules. The CSCL 200 may use the communication interfaces 312 to send the CSC tokens to the host interfaces (230).

In an illustrative example scenario, the CSCL 200 may implement the example routine in Table 2 to generate a CSC token starting from data received at the input layer 110.

| Table 2: Example Routine for Determination of CSC Token | | | |
|---|---|---|---|
| | Description | | |
| Example Routine | **Input:** Utilization database (Db), Billing Db, Cost Db, Committed Compute (CC) Purchase Db | | |
| | **Output:** Sizing Adjustment | | |
| | **Step1:** *Load the input files* | | |
| | **Step2:** *Cleanse the data* | | |
| | | **Step2a:** *Select the required variables for analysis* | |
| | | **Step2b:** *Rename the variables* | |
| | | **Step2c:** *Format the variables (date, numeric and string)* | |
| | **Step3:** ***Selecting** the maximum utilization* | | |
| | | **Step3a:** *for each resource id (1,n) sort utilization value by date and value* | |
| | | **Step3b:** *for each resource id (1,n) select maximum value for each hour* | |
| | **Step4:** ***Filtering** billing data for EC2 instances* | | |
| | | **Step4a:** Select for "Box-Usage" under "Usage Type" | |
| | **Step5:** ***Merge** Utilization, Billing, Cost Files and CC purchase history* | | |
| | | **Step5a:** *Merge Utilization and Billing files by resource id* | |
| | | **Step5b:** *Merge the output of Step5a with the Cost file (to extract the **information** of down-sized recommendation VM cost)* | |
| | | **Step5c:** *Merge CC purchase history to extract the number of CC coupons **per VM** type* | |
| | **Step6:** ***Calculating** the 95^{th} percentile utilization value* | | |
| | | **Step6a:** *Calculate the 95^{th} percentile value for each resource id (1,n)* | |
| | **Step7:** *Recommendation Flag generation* | | |
| | | | **Step7a:** *Right-Size* == *If α(t)* <= *π OR [(α(t)*> *π) & (P95(t)<µ) where,* |
| | | | *α(t)*=*maximum utilization value for the given time-period "t"* |
| | | | *π*=*maximum utilization threshold value* |
| | | | *P95(t)=95^{th} percentile utilization value for the given time-period "t"* |
| | | | *p=P95 threshold utilization value* |
| | **Step8:** *Calculate the "potential savings" (if the Right-Size (RS) recommendations are accepted)* | | |
| | | **Step8a:** *Potential Savings* = *On Demand Cost - Down-size machine Cost* | |
| | **Step9:** *Remove the duplicate records and generate the recommendations for each resource id* | | |
| | **Step10:** *RS CC computation* | | |
| | | **Step10a:** *Sort the resource id's by VM type, RS recommendation ≠ Right-size and potential savings by ascending order* | |

| | | | |
|---|---|---|---|
| | | | **Step10b:** *Exhaust the existing Reserved instances in the order* as *above* |
| | | | **Step10c:** *Remaining RS recommendations represent the RS potential savings* |
| | **Step11:** *Binning the resource id's based on "potential savings"* | | |
| | | | **Step11a:** *Bin* = *'High' if savings* <= 65%, *'Medium' if* 65% <= *savings*<= *85%, 'Low' if 85%* <= *savings* |
| | **Step12:** *Generate the final output* | | |

In some cases, the CSCL 200 may initiate deployment via the data export layer 170. The data export layer 170 may format the reservation matrix in one or more formats for transfer. For example the data export layer 170 may support format translation to java script object notation (JSON), extensible markup language (XML), comma separated value (CSV), Tableau Workbook (TBWX), hyper-text markup language (HTML) or other formats. The data export layer 170 may also support transfer of the reservation matrix in one or more states, such as flat file transfers, streaming transfers, web service access, internet protocol transfers, or other transfers.

Additionally or alternatively, the CSCL 200 may initiate deployment via the prescriptive engine layer 150 through direct transfer, direct network access, or other non-export transfer.

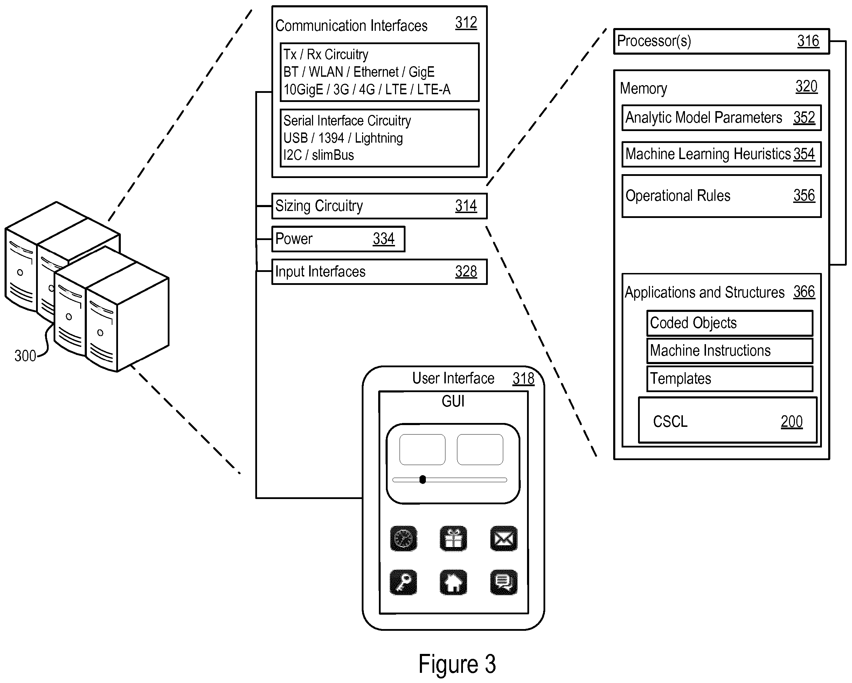

Figure 3 shows an example specific execution environment 300 for the CSC stack 100 described above. The execution environment 300 may include sizing circuitry 314 to support execution of the multiple layers of CSC stack 100 described above. The system logic may include processors 316, memory 320, and/or other circuitry.

The memory 320 may include analytic model parameters 352, machine learning heuristics 354, and operational rules 356. The memory 320 may further include applications and structures 366, for example, coded objects, machine instructions, templates, or other structures to support cleansed utilization data generation or other tasks described above. The applications and structures may implement the CSCL 200.

The execution environment 300 may also include communication interfaces 312, which may support wireless, e.g. Bluetooth, Wi-Fi, WLAN, cellular (4G, LTE/A), and/or wired, Ethernet, Gigabit Ethernet, optical networking protocols. The communication interfaces 312 may also include serial interfaces, such as universal serial bus (USB), serial ATA, IEEE 1394, lighting port, I²C, slimBus, or other serial interfaces. The communication interfaces 312 may be used to support and/or implement remote operation of the CSC control interface 164. The execution environment 300 may include power functions 334 and various input interfaces 328. The execution environment may also include a user interface 318 that may include human-to-machine interface devices and/or graphical user interfaces (GUI). The user interface 318 may be used to support and/or implement local operation of the CSC control interface 164. In various implementations, the sizing circuitry 314 may be distributed over one or more physical servers, be implemented as one or more virtual machines, be implemented in container environments such as Cloud Foundry or Docker, and/or be implemented in Serverless (functions as-a-Service) environments.

In some cases, the execution environment 300 may be a specially-defined computational system deployed in a cloud platform. In some cases, the parameters defining the execution environment may be specified in a manifest for cloud deployment. The manifest may be used by an operator to requisition cloud based hardware resources, and then deploy the software components, for example, the CSC stack 100, of the execution environment onto the hardware resources. In some cases, a manifest may be stored as a preference file such as a YAML (yet another mark-up language), JSON, or other preference file type.

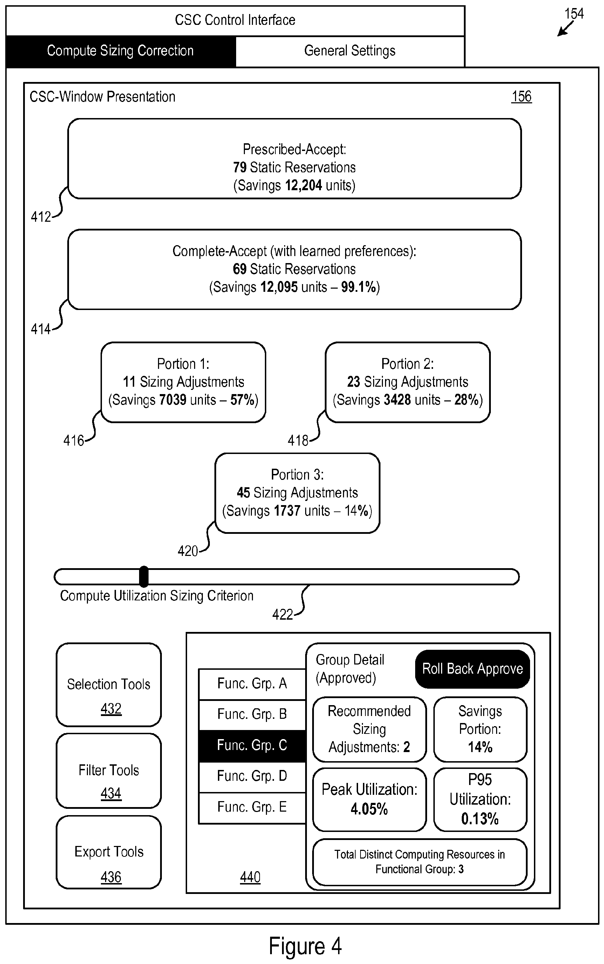

Referring now to Figure 4, an example CSC control interface 164 is shown. The CSC control interface 164 includes an example CSC-window presentation 166 as discussed above. The CSC-window presentation 166 may include multiple selectable options 412, 414, 416, 418, 420, 422 and data regarding the CSC trajectories and CSC cycle adjustments before and after alteration to accommodate the learned preferences of the operator. In this example scenario, the selectable options may include a prescribed-accept option 412 to implement some or all of the prescribed sizing adjustments as a group without alteration based on learned preferences, a complete-accept option 414 to implement the sizing adjustments with alterations based on learned preferences, options 416, 418, 420 to implement augments to selected subsets of the computing resources, option 422 to adjust preferences (e.g., thresholds, extrema, or other compute utilization sizing criteria) and re-run the routine at the prescriptive engine layer 150, or other selectable options to control the eventual CSC token output.

Additionally or alternatively, the CSC-window presentation 166 may include selection and filter tools 432, 434 to support granular manipulation of the sizing adjustments, e.g., by computing resource, by functional group, resource region, operating system, or other granular manipulation. The CSC-window presentation 166 may also include export tools 436 for management of data export layer 170 operations.

In some implementations, the CSC-window presentation 166 may include a functional group detail panel 440 for management of group-level selectable options such as group level approvals of static reservations. Additionally or alternatively, the functional group detail panel 440 may display group-level information regarding static reservations. Functional group detail panel 440 may also provide an option to roll back previously approved static reservations.

In the example, shown in Figure 4, the options 416, 418, 420 allow for manipulation of selected subsets of the computing resources. For example, as shown the example routine in table two, the sizing adjustments may be "binned" into consumption savings classes. For example, "high", "medium", and "low" consumption savings bins may allow the operator to select specific groups of sizing adjustments. The options 416, 418, 420 show the respective portions of the total consumption savings that may be achieved by adjusting each specific subset of the computing resources. In the example, the first subset option 416 provides the greatest marginal consumption savings, while the options 418, 420 provide successively smaller marginal consumption savings.

The methods, devices, processing, circuitry, and logic described above may be implemented in many different ways and in many different combinations of hardware and software. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible storage medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HDD), or other magnetic or optical disk; or in or on another machine-readable medium. A product, such as a computer program product, may include a storage medium and instructions stored in or on the medium, and the instructions when executed by the circuitry in a device may cause the device to implement any of the processing described above or illustrated in the drawings.

The implementations may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

Various implementations may use the techniques and architectures described above.

## Claims

1. A system including:
network interface circuitry configured to:
receive historical utilization data for a selected virtual machine;
receive consumption metric data for the selected virtual machine;
sizing circuitry in data communication with the network interface circuitry, the sizing circuitry configured to execute a compute sizing correction - CSC-stack,
the CSC stack including:
a data staging layer;
an input layer;
a configuration layer; and
a prescriptive engine layer;
the CSC stack executable to:
obtain, via the input layer, the historical utilization data, and the consumption metric data;
process, at the input layer, the historical utilization data to generate cleansed utilization data;
store, at the data staging layer, the cleansed utilization data, and the consumption metric data;
determine, at the configuration layer, a compute utilization sizing criterion for determining when and how strongly to apply compute sizing correction for the selected virtual machine to address over-sizing or under-sizing of the virtual machine;
store, at the data staging layer, the compute utilization sizing criterion;
access, at the prescriptive engine layer, the cleansed utilization data and the compute utilization sizing criterion via a memory resource provided by the data staging layer;
determine, at the prescriptive engine layer, a CSC trajectory for the selected virtual machine, wherein said CSC trajectory comprises:
(a) a target sizing for the selected virtual machine, wherein determining the CSC trajectory comprises determining the target sizing for the selected virtual machine as a sizing for the selected virtual machine that would cause the selected virtual machine to meet the compute utilization sizing criterion based on the cleansed utilization data; and
(b) a plurality of CSC cycle adjustments for the selected virtual machine, wherein each CSC cycle adjustment indicates a compute sizing correction step towards the target sizing; and generate a CSC token, wherein the network interface circuitry is configured to send the CSC token to a host interface, the CSC token for causing the host interface to implement the plurality of CSC cycle adjustments for the selected virtual machine.

2. The system of claim 1, where the CSC stack is executable to further determine the CSC token based on a feedback history generated using previous command inputs received from a CSC control interface generated at a presentation layer of the CSC stack.

3. The system of any one of the preceding claims, where:
the CSC stack is further executable to, at a presentation layer, generate CSC control interface including a CSC-window presentation; and
the CSC-window presentation includes a selectable option to implement the CSC trajectory.

4. The system of claim 3, where the plurality of CSC cycle adjustments are grouped within the CSC-window presentation with other CSC cycle adjustments corresponding to consumption savings within a pre-defined range.

5. The system of claim 3 or 4, where the CSC-window presentation includes a summary table detailing CSC cycle adjustments for multiple virtual machines.

6. The system of any one of claims 3 to 5, where the CSC-window presentation includes an option to reject one or more CSC cycle adjustments.

7. The system of any one of the preceding claims, where the CSC stack is executable to receive, at the input layer, the historical utilization data from an activation timetable stack.

8. The system of any one of the preceding claims, where the CSC stack is configured to receive, at the input layer, a reservation matrix detailing a static reservation for a specific virtual machine.

9. The system of claim 8, where the CSC stack is further configured to:
decrease a sizing reduction for the selected virtual machine in response to the selected virtual machine and the specific virtual machines including the same virtual machine; and
increase the sizing reduction in response to the selected virtual machine being different from the specific virtual machine but in a same functional grouping as the specific virtual machine.

10. The system of claim 9, where the CSC stack is further configured to decrease the sizing reduction for the selected virtual machine by rejecting the CSC trajectory for the selected virtual machine.

11. The system of any one of the preceding claims, where the CSC token is configured to alter a compute capability for the selected virtual machine while preserving a selected operating system, region, networking throughput, or any combination thereof for the selected virtual machine.

12. A method including:
at network interface circuitry:
receiving historical utilization data for a selected virtual machine; and
receiving consumption metric data for the selected virtual machine;
at sizing circuitry in data communication with the network interface circuitry, the sizing circuitry executing a compute sizing correction (CSC) stack:
obtaining, via an input layer of the CSC stack, the historical utilization data, and the consumption metric data;
processing, at the input layer, the historical utilization data to generate cleansed utilization data;
storing, at a data staging layer of the CSC stack, the cleansed utilization data, and the consumption metric data;
determining, at a configuration layer of the CSC stack, a compute utilization sizing criterion for determining when and how strongly to apply compute sizing correction for the selected virtual machine to address over-sizing or under-sizing of the virtual machine; and
storing, at the data staging layer, the compute utilization sizing criterion;
at a prescriptive engine layer of the CSC stack:
accessing the cleansed utilization data and the compute utilization sizing criterion via a memory resource provided by the data staging layer;
determining a CSC trajectory for the selected virtual machine, wherein said CSC trajectory comprises:
(a) a target sizing for the selected virtual machine, wherein determining the CSC trajectory comprises determining the target sizing for the selected virtual machine as a sizing for the selected virtual machine that would cause the selected virtual machine to meet the compute utilization sizing criterion based on the cleansed utilization data; and
(b) a plurality of CSC cycle adjustments for the selected virtual machine, wherein each CSC cycle adjustment indicates a compute sizing correction step towards the target sizing; and
generating a CSC token; and
sending, via network interface circuitry, the CSC token to a host interface, the CSC token for causing the host interface to implement the plurality of CSC cycle adjustments for the selected virtual machine.

13. The method of claim 12, where determining the CSC token is further based on a feedback history generated using previous command inputs from a CSC control interface generated at a presentation layer of the CSC stack.

## Patentansprüche

1. System, umfassend:
eine Netzwerkschnittstellenschaltung, ausgestaltet zum:
Empfangen historischer Nutzungsdaten für eine ausgewählte virtuelle Maschine;
Empfangen von Verbrauchsmetrikdaten für die ausgewählte virtuelle Maschine;
eine Größeneinteilungsschaltung in Datenkommunikation mit der Netzwerkschnittstellenschaltung, wobei die Größeneinteilungsschaltung ausgestaltet ist, einen Rechengrößeneinteilungskorrektur-, CSC-, Stapel auszuführen,
wobei der CSC-Stapel umfasst:
eine Daten-Staging-Schicht;
eine Eingabeschicht;
eine Konfigurationsschicht; und
eine präskriptive Engine-Schicht;
wobei der CSC-Stapel auszuführbar ist zum:
Erhalten, über die Eingabeschicht, der historischen Nutzungsdaten, und der Verbrauchsmetrikdaten;
Verarbeiten, an der Eingabeschicht, der historischen Nutzungsdaten, um bereinigte Nutzungsdaten zu erzeugen;
Speichern, an der Daten-Staging-Schicht, der bereinigten Nutzungsdaten, und der Verbrauchsmetrikdaten;
Bestimmen, an der Konfigurationsschicht, eines Rechennutzungsgrößeneinteilungskriteriums, um zu bestimmen, wann und wie stark eine Rechengrößeneinteilungskorrektur für die ausgewählte virtuelle Maschine anzuwenden ist, um eine Überdimensionierung und eine Unterdimensionierung der virtuellen Maschine anzugehen;
Speichern, an der Daten-Staging-Schicht, des Rechennutzungsgrößeneinteilungskriteriums;
Zugreifen, an der präskriptiven Engine-Schicht, auf die bereinigten Nutzungsdaten und das Rechennutzungsgrößeneinteilungskriterium über eine Speicherressource, die von der Daten-Staging-Schicht bereitgestellt wird;
Bestimmen, an der präskriptiven Engine-Schicht, einer CSC-Bahn für die ausgewählte virtuelle Maschine, wobei die CSC-Bahn umfasst:
(a) eine Zielgrößeneinteilung für die ausgewählte virtuelle Maschine, wobei das Bestimmen der CSC-Bahn ein Bestimmen der Zielgrößeneinteilung für die ausgewählte virtuelle Maschine als Größeneinteilung für die ausgewählte virtuelle Maschine umfasst, die verursachen würde, dass die ausgewählte virtuelle Maschine das Rechennutzungsgrößeneinteilungskriterium erfüllt, basierend auf den bereinigten Nutzungsdaten; und
(b) eine Mehrzahl von CSC-Zyklusanpassungen für die ausgewählte virtuelle Maschine, wobei jede CSC-Zyklusanpassung einen Rechengrößeneinteilungskorrekturschritt in Richtung der Zielgrößeneinteilung anzeigt; und
Erzeugen eines CSC-Tokens, wobei die Netzwerkschnittstellenschaltung ausgestaltet ist, das CSC-Token an eine Host-Schnittstelle zu senden, wobei das CSC-Token dazu dient, zu verursachen, dass die Host-Schnittstelle die Mehrzahl von CSC-Zyklusanpassungen für die ausgewählte virtuelle Maschine durchführt.

2. System nach Anspruch 1, wobei der CSC-Stapel ausführbar ist, um weiter das CSC-Token basierend auf einer Rückmeldungshistorie zu bestimmen, die unter Verwendung früherer Befehlseingaben erzeugt wird, die von einer CSC-Steuerschnittstelle empfangen werden, die an einer Präsentationsschicht des CSC-Stapels erzeugt wird.

3. System nach einem der vorhergehenden Ansprüche, wobei:
der CSC-Stapel ferner ausführbar ist, um, an einer Präsentationsschicht, eine CSC-Steuerschnittstelle zu erzeugen, die eine CSC-Fensterpräsentation umfasst; und
die CSC-Fensterpräsentation eine auswählbare Option umfasst, um die CSC-Bahn durchzuführen.

4. System nach Anspruch 3, wobei die Mehrzahl von CSC-Zyklusanpassungen innerhalb der CSC-Fensterpräsentation mit anderen CSC-Zyklusanpassungen, die Verbrauchseinsparungen innerhalb eines vorgegebenen Bereichs entsprechen, eingruppiert ist.

5. System nach Anspruch 3 oder 4, wobei die CSC-Fensterpräsentation eine Übersichtstabelle umfasst, die CSC-Zyklusanpassungen für mehrere virtuelle Maschinen detailliert beschreibt.

6. System nach einem der Ansprüche 3 bis 5, wobei die CSC-Fensterpräsentation eine Option umfasst, um eine oder mehrere CSC-Zyklusanpassungen abzulehnen.

7. System nach einem der vorhergehenden Ansprüche, wobei der CSC-Stapel ausführbar ist, um, an der Eingabeschicht, die historischen Nutzungsdaten von einem Aktivierungszeitplanstapel zu empfangen.

8. System nach einem der vorhergehenden Ansprüche, wobei der CSC-Stapel ausgestaltet ist, an der Eingabeschicht eine Reservierungsmatrix zu empfangen, die eine statische Reservierung für eine bestimmte virtuelle Maschine detailliert beschreibt.

9. System nach Anspruch 8, wobei der CSC-Stapel ferner ausgestaltet ist zum:
Verringern einer Größeneinteilungsreduktion für die ausgewählte virtuelle Maschine ansprechend darauf, dass die ausgewählte virtuelle Maschine und die bestimmten virtuellen Maschinen dieselbe virtuelle Maschine umfassen; und
Vergrößern der Größeneinteilungsreduktion ansprechend darauf, dass die ausgewählte virtuelle Maschine sich von der bestimmten virtuellen Maschine unterscheidet, aber in derselben funktionalen Eingruppierung wie die bestimmte virtuelle Maschine ist.

10. System nach Anspruch 9, wobei der CSC-Stapel ferner ausgestaltet ist, die Größeneinteilungsreduktion für die ausgewählte virtuelle Maschine durch Ablehnen der CSC-Bahn für die ausgewählte virtuelle Maschine zu verringern.

11. System nach einem der vorhergehenden Ansprüche, wobei das CSC-Token ausgestaltet ist, eine Rechenleistung für die ausgewählte virtuelle Maschine zu ändern, während ein ausgewähltes Betriebssystem, ein ausgewählter Bereich, ein ausgewählter Netzwerkdurchsatz oder eine beliebige Kombination davon für die ausgewählte virtuelle Maschine beibehalten wird.

12. Verfahren, umfassend:
an einer Netzwerkschnittstellenschaltung:
Empfangen historischer Nutzungsdaten für eine ausgewählte virtuelle Maschine; und
Empfangen von Verbrauchsmetrikdaten für die ausgewählte virtuelle Maschine;
an einer Größeneinteilungsschaltung in Datenkommunikation mit der Netzwerkschnittstellenschaltung, wobei die Größeneinteilungsschaltung einen Rechengrößeneinteilungskorrektur-, CSC-, Stapel ausführt:
Erhalten, über eine Eingabeschicht des CSC-Stapels, der historischen Nutzungsdaten, und der Verbrauchsmetrikdaten;
Verarbeiten, an der Eingabeschicht, der historischen Nutzungsdaten, um bereinigte Nutzungsdaten zu erzeugen;
Speichern, an einer Daten-Staging-Schicht des CSC-Stapels, der bereinigten Nutzungsdaten, und der Verbrauchsmetrikdaten;
Bestimmen, an einer Konfigurationsschicht des CSC-Stapels, eines Rechennutzungsgrößeneinteilungskriteriums, um zu bestimmen, wann und wie stark eine Rechengrößeneinteilungskorrektur für die ausgewählte virtuelle Maschine anzuwenden ist, um eine Überdimensionierung oder eine Unterdimensionierung der virtuellen Maschine anzugehen; und
Speichern, an der Daten-Staging-Schicht, des Rechennutzungsgrößeneinteilungskriteriums;
an einer präskriptiven Engine-Schicht des CSC-Stapels:
Zugreifen auf die bereinigten Nutzungsdaten und das Rechennutzungsgrößeneinteilungskriterium über eine Speicherressource, die von der Daten-Staging-Schicht bereitgestellt wird;
Bestimmen einer CSC-Bahn für die ausgewählte virtuelle Maschine, wobei die CSC-Bahn umfasst:
(a) eine Zielgrößeneinteilung für die ausgewählte virtuelle Maschine, wobei das Bestimmen der CSC-Bahn ein Bestimmen der Zielgrößeneinteilung für die ausgewählte virtuelle Maschine als Größeneinteilung für die ausgewählte virtuelle Maschine umfasst, die verursachen würde, dass die ausgewählte virtuelle Maschine das Rechennutzungsgrößeneinteilungskriterium erreicht, basierend auf den bereinigten Nutzungsdaten; und
(b) eine Mehrzahl von CSC-Zyklusanpassungen für die ausgewählte virtuelle Maschine, wobei jede CSC-Zyklusanpassung einen Rechengrößeneinteilungskorrekturschritt in Richtung der Zielgrößeneinteilung anzeigt; und
Erzeugen eines CSC-Tokens; und
Senden, über eine Netzwerkschnittstellenschaltung, des CSC-Tokens an eine Host-Schnittstelle, wobei das CSC-Token dazu dient, zu verursachen, dass die Host-Schnittstelle die Mehrzahl von CSC-Zyklusanpassungen für die ausgewählte virtuelle Maschine durchführt.

13. Verfahren nach Anspruch 12, wobei das Bestimmen des CSC-Tokens ferner auf einer Rückmeldungshistorie basiert, die unter Verwendung früherer Befehlseingaben von einer CSC-Steuerschnittstelle erzeugt wird, die an einer Präsentationsschicht des CSC-Stapels erzeugt wird.

## Revendications

1. Système comprenant :
des circuits d'interface réseau configurés pour :
recevoir des données d'utilisation historiques pour une machine virtuelle sélectionnée ;
recevoir des données de métriques de consommation pour la machine virtuelle sélectionnée ;
des circuits de dimensionnement en communication de données avec les circuits d'interface réseau, les circuits de dimensionnement étant configurés pour exécuter une pile de correction de dimensionnement informatique (CSC),
la pile CSC comprenant :
une couche de mise en place de données ;
une couche d'entrée ;
une couche de configuration ; et
une couche de moteur prescriptive ;
la pile CSC pouvant être exécutée pour :
obtenir, via la couche d'entrée, les données d'utilisation historiques, et les données de métriques de consommation ;
traiter, au niveau de la couche d'entrée, les données d'utilisation historiques pour générer des données d'utilisation nettoyées ;
stocker, au niveau de la couche de mise en place de données, les données d'utilisation nettoyées, et les données de métriques de consommation ;
déterminer, au niveau de la couche de configuration, un critère de dimensionnement d'utilisation informatique pour déterminer quand et avec quelle force appliquer la correction de dimensionnement informatique pour la machine virtuelle sélectionnée afin de remédier au surdimensionnement ou sous-dimensionnement de la machine virtuelle ;
stocker, au niveau de la couche de mise en place de données, le critère de dimensionnement informatique ;
accéder, au niveau de la couche de moteur prescriptive, aux données d'utilisation nettoyées et au critère de dimensionnement d'utilisation informatique via une ressource de mémoire fournie par la couche de mise en place de données ;
déterminer, au niveau de la couche de moteur prescriptive, une trajectoire CSC pour la machine virtuelle sélectionnée, où ladite trajectoire CSC comprend :
(a) un dimensionnement cible pour la machine virtuelle sélectionnée, où la détermination de la trajectoire CSC comprend la détermination du dimensionnement cible pour la machine virtuelle sélectionnée en tant que dimensionnement pour la machine virtuelle sélectionnée qui amènerait la machine virtuelle sélectionnée à répondre au critère de dimensionnement d'utilisation informatique sur la base des données d'utilisation nettoyées ; et
(b) une pluralité d'ajustements de cycle CSC pour la machine virtuelle sélectionnée, où chaque ajustement de cycle CSC indique une étape de correction de dimensionnement informatique vers le dimensionnement cible ; et
générer un jeton CSC, où les circuits d'interface réseau sont configurés pour envoyer le jeton CSC à une interface hôte, le jeton CSC amenant l'interface hôte à mettre en oeuvre la pluralité d'ajustements de cycle CSC pour la machine virtuelle sélectionnée.

2. Système de la revendication 1, dans lequel la pile CSC peut être exécutée pour déterminer en outre le jeton CSC sur la base d'un historique de rétroaction généré en utilisant des entrées d'instruction précédentes reçues à partir d'une interface de commande CSC générée au niveau d'une couche de présentation de la pile CSC.

3. Système de l'une quelconque des revendications précédentes, dans lequel :
la pile CSC peut être en outre exécutée pour, au niveau d'une couche de présentation, générer une interface de commande CSC comprenant une présentation de fenêtre CSC ; et
la présentation de fenêtre CSC comprend une option sélectionnable pour mettre en oeuvre la trajectoire CSC.

4. Système de la revendication 3, dans lequel la pluralité d'ajustements de cycle CSC sont regroupés dans la présentation de fenêtre CSC avec d'autres ajustements de cycle CSC correspondant à des économies de consommation dans une plage prédéfinie.

5. Système de la revendication 3 ou 4, dans lequel la présentation de fenêtre CSC comprend un tableau récapitulatif détaillant les ajustements de cycle CSC pour plusieurs machines virtuelles.

6. Système de l'une quelconque des revendications 3 à 5, dans lequel la présentation de fenêtre CSC comprend une option pour rejeter un ou plusieurs ajustements de cycle CSC.

7. Système de l'une quelconque des revendications précédentes, dans lequel la pile CSC peut être exécutée pour recevoir, au niveau de la couche d'entrée, les données d'utilisation historiques à partir d'une pile de calendrier d'activation.

8. Système de l'une quelconque des revendications précédentes, dans lequel la pile CSC est configurée pour recevoir, au niveau de la couche d'entrée, une matrice de réservation détaillant une réservation statique pour une machine virtuelle spécifique.

9. Système de la revendication 8, dans lequel la pile CSC est en outre configurée pour :
diminuer une réduction de dimensionnement pour la machine virtuelle sélectionnée en réponse au fait que la machine virtuelle sélectionnée et les machines virtuelles spécifiques comprennent la même machine virtuelle ; et
augmenter la réduction de dimensionnement en réponse au fait que la machine virtuelle sélectionnée est différente de la machine virtuelle spécifique mais dans un même groupement fonctionnel que la machine virtuelle spécifique.

10. Système de la revendication 9, dans lequel la pile CSC est en outre configurée pour diminuer la réduction de dimensionnement pour la machine virtuelle sélectionnée en rejetant la trajectoire CSC pour la machine virtuelle sélectionnée.

11. Système de l'une quelconque des revendications précédentes, dans lequel le jeton CSC est configuré pour modifier une capacité de calcul pour la machine virtuelle sélectionnée tout en préservant un système d'exploitation sélectionné, une région, un débit de réseau, ou toute combinaison de ceux-ci pour la machine virtuelle sélectionnée.

12. Procédé comprenant les étapes consistant à :
au niveau de circuits d'interface réseau :
recevoir des données d'utilisation historiques pour une machine virtuelle sélectionnée ; et
recevoir des données de métriques de consommation
pour la machine virtuelle sélectionnée ;
au niveau de circuits de dimensionnement en communication de données avec les circuit d'interface réseau, les circuits de dimensionnement exécutant une pile de correction de dimensionnement informatique (CSC) :
obtenir, via une couche d'entrée de la pile CSC, les données d'utilisation historiques, et les données de métriques de consommation ;
traiter, au niveau de la couche d'entrée, les données d'utilisation historiques pour générer des données d'utilisation nettoyées ;
stocker, au niveau d'une couche de mise en place de données de la pile CSC, les données d'utilisation nettoyées, et les données de métriques de consommation ;
déterminer, au niveau d'une couche de configuration de la pile CSC, un critère de dimensionnement d'utilisation informatique pour déterminer quand et avec quelle force appliquer la correction de dimensionnement informatique pour la machine virtuelle sélectionnée afin remédier au surdimensionnement ou sous-dimensionnement de la machine virtuelle ; et
stocker, au niveau de la couche de mise en place de données, le critère de dimensionnement d'utilisation informatique ;
au niveau d'une couche de moteur prescriptive de la pile CSC :
accéder aux données d'utilisation nettoyées et au critère de dimensionnement d'utilisation informatique via une ressource de mémoire fournie par la couche de mise en place de données ;
déterminer une trajectoire CSC pour la machine virtuelle sélectionnée, où ladite trajectoire CSC comprend :
(a) un dimensionnement cible pour la machine virtuelle sélectionnée, où la détermination de la trajectoire CSC comprend la détermination du dimensionnement cible pour la machine virtuelle sélectionnée en tant que dimensionnement pour la machine virtuelle sélectionnée qui amènerait la machine virtuelle sélectionnée à répondre au critère de dimensionnement d'utilisation informatique sur la base des données d'utilisation nettoyées ; et
(b) une pluralité d'ajustements de cycle CSC pour la machine virtuelle sélectionnée, où chaque ajustement de cycle CSC indique une étape de correction de dimensionnement informatique vers le dimensionnement cible ; et
générer un jeton CSC ; et
envoyer, via des circuits d'interface réseau, le jeton CSC à une interface hôte, le jeton CSC amenant l'interface hôte à mettre en oeuvre la pluralité d'ajustements de cycle CSC pour la machine virtuelle sélectionnée.

13. Procédé de la revendication 12, dans lequel la détermination du jeton CSC est en outre basée sur un historique de rétroaction généré en utilisant des entrées d'instruction précédentes à partir d'une interface de commande CSC générée au niveau d'une couche de présentation de la pile CSC.
